# EUROPEAN PATENT SPECIFICATION

(11) **EP 3 187 838 B1**
(45) Date of publication and mention of the grant of the patent: **25.03.2020**
(21) Application number: 15460112.4
(22) Date of filing: 29.12.2015
(51) Int. Cl.: G01G 19/02

(54) **SYSTEM FOR VEHICLES WEIGHT PRESELECTION AND EVALUATION OF THE TECHNICAL STATE OF ROAD INFRASTRUCTURE**
SYSTEM ZUR FAHRZEUGGEWICHTSVORAUSWAHL UND BEURTEILUNG DES TECHNISCHEN ZUSTANDS EINER STRASSENINFRASTRUKTUR
SYSTÈME POUR PRÉSÉLECTION DE POIDS DE VÉHICULE ET ÉVALUATION DE L'ÉTAT TECHNIQUE D'UNE INFRASTRUCTURE ROUTIÈRE

(43) Date of publication of application: 05.07.2017
(73) Proprietor: Neostrain spolka z ograniczona odpowiedzialnoscia, 30-702 Krakow (PL)
(72) Inventor: Stolinski, Marek, 31-867 Krakow (PL); Habura, Michal, 31-618 Kraków (PL); KLIKOWICZ, Piotr, 42-500 Bedzin (PL); ZAJAC, Monika, 30-717 Kraków (PL)
(74) Representative: Karczmitowicz, Teresa Ewa

(56) References cited:
- DE-A1-102008 026 483
- US-A- 5 111 897
- US-A1- 2006 137 914
- US-A1- 2007 062 289
- US-B1- 6 459 050

## Description

The invention relates to a system for vehicles weight preselection and evaluation of technical state of engineering structures. Invented system is designed especially for monitoring bridges by controlling the mass of vehicles on the road infrastructure facilities, such as bridges or overpasses. The aim of the system is to detect and identify those road users who destroy infrastructure, carrying oversize loads, and to assess the technical condition of the facility's structure.

The development of road network and increased traffic leads to degradation of road infrastructure including bridges and reduces the level of safety. One of the main reasons for considerable shortening of the usage life of the paving of roads and bridges is that trucks cross the limit values of individual axle pressures. Despite the growing awareness of drivers about negative impact of overloads on quality of the road surface, there are still violations of the rules on overloading of vehicles. This forces a search for new solutions aimed at protecting roads and bridges against their degradation. An example is the weight preselection intelligent systems detecting vehicles that exceed the permissible axle loads and the permissible weight.

American patent US6459050 (B1) describes an apparatus and method for converting in-ground static weighing scales for vehicles to weigh-in-motion systems. The apparatus upon conversion includes the existing in-ground static scale, peripheral switches and an electronic module for automatic computation of the weight. By monitoring the velocity, tire position, axle spacing, and real time output from existing static scales as a vehicle drives over the scales, the system determines when an axle of a vehicle is on the scale at a given time, monitors the combined weight output from any given axle combination on the scale(s) at any given time, and from these measurements automatically computes the weight of each individual axle and gross vehicle weight by an integration, integration approximation, and/or signal averaging technique.

Chinese description of invention CN102998081 (A) discloses a method of bridge monitoring by using multiple strapdown inertial systems. The method includes: performing position setting for the strapdown inertial systems according to the dynamic characteristic of a bridge structure and performing installation calibration and initial calibration for the strapdown inertial systems; carrying out bridge dynamic load tests, and performing continuous monitoring by using deformation and vibration information of the strapdown inertial systems relative to a reference point and measurement points; obtaining static deformation angles and dynamic deformation angles of the measurement points of the bridge at each moment by using the deformation information obtained in an inertial test matching method; obtaining a girder deflection curve of the bridge by using the dynamic deformation angles of the inertial systems calculated at the reference point and the measurement points, and obtaining an impact coefficient of the bridge through further processing; using accelerometer output information to obtain acceleration time history curves of all the measurement points and obtaining displacement time history curves through integration; and analyzing the acceleration time history curves and the displacement time history curves in a time domain analysis method and a frequency domain analysis method to obtain structural parameters including bridge amplitude, damping ratio and vibration mode.

A weighing apparatus and method, according to international patent application WO2015127024 (A1) enable an object to be weighed while the object and/or the weighing apparatus is in motion. The apparatus and method employ a load cell and an accelerometer that are both mounted on a platform upon which the object is situated. A signal from the load cell and a signal from the accelerometer are combined together to derive a mass of the load. Such combining of the signals may occur via signal processing that may include digital processing and/or analog processing. The load cell and the accelerometer each have an operative direction, and they may be oriented with respect to one another on the platform such that the operative directions are opposite one another to enable the two signals to be input to an analog multiplication circuit to derive a weight of the object.

The invention described in Korean patent KR101366103 (B1) relates to a BWIM ("Bridge Weighing In Motion") system using the reaction force response of supporting points capable of measuring a load response caused when a vehicle passes using bridge bearings on which a sensor for measuring vertical load is installed to accurately and conveniently obtain the axle weight, the gross weight, the distance between axles, and the driving speed of the passing vehicle in order to calculate the load of the vehicle through the reaction force measurement using the bridge bearings: The invention comprises: a load response measuring and preprocessing part for measuring the reaction force response caused by the vehicle passing a bridge and preprocessing the data on the measured load response; an axle number determining and wheel base calculating part for determining a number of the axles of the passing vehicle and calculating the distance between the axles of the passing vehicle; a passing crossroad determining and passing speed calculating part for determining a passing crossroad of the vehicle passing the bridge and calculating the passing speed of the vehicle; and an axle weight and gross weight calculating part for calculating the axle weight and the gross weight of the passing vehicle.

Chinese utility model CN201136522 (Y) discloses a horizontal and vertical dynamic displacement measurement device for a high speed railway track line, belonging to the field of railway transportation. The dynamic shift measurement device comprises two reflecting plates, two laser displacement transducers and a portable data processing and display device; wherein, the two reflecting plates are arranged at the waist part of a railway track to be detected with one reflecting plate being vertical to the ground and the other forming a forty five degree angle with the ground. The reflecting plate which forms a forty five degree angle with the ground is utilized to equivalently convert the vertical displacement of the track line into horizontal distance variance based' on 1:1 proportion. The measuring heads of the two laser displacement transducers are aligned towards two reflecting plates to measure the dynamic horizontal displacement and complex displacement which comprises the horizontal displacement and the vertical displacement when a high speed train passes; the data which is measured out by the two laser displacement transducers is then processed by the portable data processing and display device and the horizontal and vertical displacement of the track line at the moment when the high speed train passes can be directly read out.

The invention described in American patent application US2011313686 (A1) relates to a method for applying extensometric sensors in railway tracks, in combination with electronic equipment and a post-processing of the signals and data obtained to measure the stresses on railway tracks and the like, as well as to measure contact forces between the wheel of the vehicle or train and the actual rail on which it is travelling. According to the method, the following is performed: capturing micro-deformations in a known point of the track; analyzing these micro-deformations; identifying the element corresponding to the micro-deformation signal peaks coinciding with the passage of the train over one of the cross members of the track; analyzing the micro-deformation signal peaks previously identified; obtaining signals by means of sensors arranged in plates screwed to the rail; and finally calibrating each detected micro-deformation peak and the relationship thereof with the magnitudes to be measured.

American description of invention US5111897 (A) discloses an apparatus and method for calculating the speed and weight of a vehicle as it passes over an existing bridge. The apparatus includes a number of strain gauges attachable to existing bridge girders or support members each of which outputs an analog strain signal in response to strain sustained by the bridge when a vehicle passes thereover. An analog front end circuit card amplifies the analog strain signal and converts it into digital format. A pair of axle sensors installed in or on the pavement before the bridge each output an axle sense signal in response to a vehicle axle passing thereover. A central processing unit receives the axle sense signals and the digitally formatted strain signals, and performs calculations necessary to determine vehicle speed and axle weight using a least squares error minimization algorithm. A static random access memory card is used to retain the results of these calculations.

It is widely known that trucks have the greatest impact on the road damage when their weight exceeds the established norms. The "fourth power law" used in the road engineering says that a truck with a standard axle load of 100 kN has such an impact on a road surface as 160 thousands of the passenger cars with axle load equal to 5 kN. The truck axle load of twice the value i.e. 200 kN causes a 16-fold greater destruction of the road surface, which is equivalent to more than 2.5 millions of passenger vehicles. For the evaluation of wear/damage of any surfaces and structures, including bridges and viaducts, fatigue analysis is applied, based on the recommendations comprised in the Eurocodes, which set European standards defining principles for designing and building of structures, and the ways of verifying the characteristics of constructions. Analysis in accordance with Eurocodes base on the number of load cycles that can be combined in an algorithm with a predetermined number of trucks and their axles. Fatigue analysis, or analysis determining the highest levels of cyclic strain that does not cause damage to infrastructure, is a prediction of changes in the technical structure partly based on empirical formulas and probability.

Invented system for vehicles weight preselection and evaluation of the technical state of road infrastructure aims to indicate these vehicles whose weight exceeds the limits set out in relevant norms. The purpose of weight preselection system of the present invention is to detect overloaded vehicles and pass this information to the competent services. Detection of an overloaded vehicle takes place in motion, without stopping, by a method for measuring the WIM ("Weigh-In-Motion"). The main task of the system according to the invention is the ongoing control of passing trucks and identifying those which are found to exceed the maximum permissible weight (according to COST323 - 40 t) or exceeding the permissible axle pressure (by COST323 - 11.5 t on drive axle).

After an overloaded vehicle is detected, the system within a few seconds generates a notification and shows on the monitor the vehicle data permitting its identification (picture, registration number, type, weight). On the basis of this information the inspector may stop the vehicle and perform a thorough inspection including additional weighing on a certified vehicle weight. A possibility of increasing the controls efficiency by choosing a vehicle of considerable mass is the main advantage of using the weight preselection system.

The system for vehicles weight preselection and evaluation of the technical state of road infrastructure includes a preselection station for weighing vehicles in motion, and central data repository.

Each preselection station is equipped with a module comprising a set of strain sensors and a module visually identifying the vehicles.

The collected data allow for:
- preselection of overloaded vehicles together with monitoring of the technical condition of the structure, e.g. a bridge,
- analysis of the traffic.

Estimating the total weight of the vehicle is based on data from the strain sensors such as resistivity, string or fiber optics sensors which are located in or on the bridge span. The sensors provide information on local deformation of the object.

In the system according to the invention the plane of the strain sensors is located at the place of highest deflection of the bridge structure. Past tests indicate that the greatest amount of deflection occurs at mid-span. As a result of such location of the sensors plane it is also possible to obtain information on the actual number of axles of the car.

The detection of the actual number of axles is inherent to correct load estimation of the vehicle that enters a bridge or other monitored object of road infrastructure. Over- or underestimation of number of axles in the analysis estimating the vehicle weight leads to erroneous results.

It was found in the trial tests and numerical analysis that the number of sensors used for registering the deformation strain underlying information for-identifying the number of axles of the vehicle should be from 3 to 6 pieces per lane, wherein the exact number is determined by the design of the structure, e.g. the bridge. The sensors are arranged in a vertical plane passing through the center of the span length, or for the continuous beams through the point of greatest deflection, respectively under tire traces of the vehicle and in the middle of the lane. If the object has a number of lanes, then an additional sensor is mounted between them in the mid-span plane.

An important role in the weight truck analysis is played by the speed value at which the vehicle is moving, so in order to determine the speed of the vehicle in the monitored area two or four additional strain sensors for detecting the vehicle speed should be mounted. They are placed in two vertical planes located preferably at 1/4 and 3/4 of the span length, suitably one or two in each plane, under the vehicle tire traces. An equal distance between all the planes on which the sensors are mounted is retained. The preferred distance between the sensors is therefore the result of span length and the sensors arrangement, i.e. in a plane passing through the center of the span, and in the planes that intersect the span at 1/4 and 3/4 of its length. If the bridge is made of several spans, the sensors are mounted on outer spans, and/or on one of internal spans.

Assuming that the vehicle movement is close to the rectilinear uniform motion and knowing the distance between the sensors and the moment of the vehicle first axle rollover on the sensor at 1/4 and 3/4 of the object span, the vehicle's speed can be determined.

Due to the fact that in practice one deals with different bridge constructions, the sensors used in the system according to the invention are attached to the bridge construction with a technique dependent on the type of the bridge surface. They can be glued, screwed, welded to the surface of the lower plate, or embedded in the concrete.

Supporting structures of reinforced concrete, prestressed, steel, composite, or prefabricated bridges, including particularly popular prestressed beams of "Kujan" type in the shape of inverted T, I-beams "WBS", and T-beams, can be made directly on site.

From the point of view of statics the beam objects can be divided into single- or multi-span, with spans and span numbers matching the terrain obstacle and the selected design.

Installation of sensors depends on the material used for construction. The most universal method of installation is gluing the sensors to the structure surface. Before gluing the surface should be properly prepared, cleaned and degreased. The sensor is mounted via a dedicated holder with an adhesive suitable for given material.

In case of reinforced concrete and prestressed structures usage of anchors is a more durable solution. After the anchor is fastened in the right place the sensor is tightened.

In case of steel structure the sensors can be welded. In composite structure the mounting method is selected as for steel or reinforced concrete respectively in the relevant points.

The structures made of concrete, i.e. reinforced concrete, and compressed or complex constructions, the sensors can be embedded in concrete or attached to reinforcing steel inside the structure, which significantly increases their durability.

Prefabricated beams with pre-installed sensors are known as "smart beams". According to the invention the smart beams are part of the object, e.g. the bridge. In the invented system one or more smart beams are embedded in the platform.

To achieve maximum accuracy, in the bridge structure built of prefabricated beams of "Kujan", "T", or "WBS" type, the sensors are installed in the tension or compression zone of the beam, or in both zones.

Measurement data of the object deformations are transmitted to the recording-computing device equipped with software consisting of the algorithms processing the data transmitted by the sensors.

Another module of the system according to the invention is a module for visually identifying the vehicles, which comprises one or more cameras positioned on the side of the road (one camera per lane) that capture the road and the controlled vehicle. This module also includes cameras for automatic license plate recognition system (ARTR). These cameras, one for each lane of the roadway, are placed above the center of each lane. The measuring camera records the front of the vehicle approaching the plane of deformation sensors placed e.g. in the bridge span center. Its task is to capture a license plate for automatic recognition of its contents. Video module is equipped with an industrial computer receiving the images form the cameras. Each image is analyzed by image recognition software specialized for the license plates.

Subsequent measurements obtained from the two modules are subject to algorithmic analysis. Data obtained from the module of strain sensors is the key input to calculations. A change of the object deformation in the strain sensors attachment points induced by a passing vehicle is related to the reference data or the so called calculation strain, which is determined during calibration of the system. Calibration consists of multiple crossings of the object/bridge by heavy vehicles with known parameters such as weight, spacing of axles, speed, etc. On the basis of data provided from the field studies and taking into account the line of impact theory, a reference dynamic line of impact for the monitored structure is calculated.

Signals from all the strain sensors operating synchronously are continuously registered. Synchronizing the operation of all sensors is necessary for calculation of the vehicle actual speed which is determined based on the time difference of the maximum amplitude of the structure deformation, and the known distance between the measurement planes. The speed is important, because it is a factor influencing the deformation of the structure, and a parameter used for further signal analysis, e.g. determining the number and spacing of axles of passing vehicles, travel time and length of the vehicle. Continuous measurement enables to capture the factors associated to the structure fatigue, thereby forming a complete picture of the behavior of the object.

The strain data showing local deformation of the object are recorded synchronously from all measuring points where the sensors are installed, so the fatigue cycles are calculated in a given period of operation and the changes in the follow-up period of operation are predicted. The sensors are connected by wire or wirelessly to the control unit which is a registering-computing device equipped with software, consisting of the algorithms processing data transmitted by the sensors. The structure deformation waveforms at the measuring points are measured. On the basis of obtained values of time-dependent deformation of the structure the maximum strain is determined, which is the basis for estimation of the force causing the deformation. The maximum deformation related to values obtained during calibration of the system allows for estimation of the axle load forces exerted on the object.

The software in the module for visual identification of vehicles analyzes every shot from the camera in less than a second. Upon detection of the license plate the program starts tracking of the vehicle on successive images. As a result, the full sequence of the vehicle motion is recorded and the contents of its license plate is recognized. The system works both day and night. Industrial computer communicates with the device analyzing data from weighing of vehicles. For this purpose a communication frame has been developed composed of a header and a checksum transmitted to and from the computer. The weighing system transmits information about a time of the first axle rollover on the specific sensor of the vehicle weighed, and its speed. The system then selects the images from regular and ARTR cameras with the vehicle registration number, and then sends the information about this vehicle to the weighing system. Subsequently, the data are combined into a file of integrated vehicle information. In this way, one file of measurement data is produced for each vehicle.

The system according to the invention operates continuously in the following test cycle:
- vehicle passing on a structure,
- recording the travel history,
- data analysis,
- feedback:
- speed of the vehicle,
- number of axles of the vehicle,
- wheelbase of the vehicle,
- pressure on individual axles,
- total weight of the vehicle,
- vehicle class,
- number of cycles in relation to the total theoretical number of cycles before the structure destruction.

The main task of the system according to the invention is the ongoing control of passing trucks and preselection of the vehicles exceeding the permissible maximum mass and axle load. In addition, the system can provide information on vehicles that exceed the speed limit.

A system for weight preselection and evaluation of the technical state of road infrastructure, in particular a bridge, is characterized in that it comprises a control unit, a set of the strain sensors connected wirelessly or by wire to the control unit and placed in a roadway, and at least one camera connected wirelessly or by wire to the control unit and placed over the road lane. The values of pressure exerted on each sensor, and of time interval between successive peaks of pressure from each sensor are measured. The camera placed above the road lane makes an image of the front of the vehicle, and the vehicle is automatically identified based on the images recorded by the camera. The result of identification is recorded in a data file identifying the vehicle, and the speed of the vehicle and the number of axles of the vehicle are determined from the peaks of pressure and time intervals between successive peaks. The value of load on each axle of the vehicle is calculated, as well as the axle overload value equal to the difference between the load on given axle and the threshold. The calculated values are attributed to the data file identifying the vehicle. The vehicles for which the calculated value of difference between the load on each axle and the threshold value is greater than zero are selected.

The sensors are strain sensors, accelerometers, resistivity sensors, optical fiber sensors or string sensors, preferably measuring pressure in the vertical direction.

The vehicles for which the measured speed is greater than a threshold value can be selected additionally.

On a basis of measured values of pressure on each axle, speed, weight, vehicle wheelbase and length, and the number of measuring cycles, a degree of technical wear of the engineering object, in particular a bridge, is calculated.

The strain sensors are placed in a plane of the cross section of the roadway under direct vertical influence of wheels of the vehicle.

Alternatively, the strain sensors are placed in a plane of the cross section of the roadway in the lane midway between the locations of direct vertical influence of wheels of the vehicle.

In the road structures with at least two lanes in the roadway the strain sensors are additionally placed in the plane of the cross section of the roadway between the lanes.

Preferably, the cross section plane of the roadway, wherein the strain sensors are placed, is situated at 1/4 and/or 1/2 and/or 3/4 of the length of the selected segment of the roadway.

In preferred embodiment the selected segment of the roadway is the span of the bridge.
in the multi-span bridges the strain sensors are mounted on the outer spans of the bridge and/or on a selected internal span.

The strain sensors are placed on and/or within and/or below the support structure of the bridge span.

Alternatively, the strain sensors are embedded inside the supporting structure of the bridge span.

In another embodiment of the invention an additional camera connected to the control unit is placed on the roadway side next to the monitored lane.

All the measurement data are recorded in the storage memory of the control unit.

The system according to the invention is shown in the embodiments on the drawings, wherein:
Fig. 1a shows an arrangement of sensors in a single-span bridge in top view, in the planes A-A and B-B, with one sensor per lane in the plane B-B;
Fig. 1b shows an arrangement of sensors in a single-span bridge in top view, in the planes A-A and B-B, with two sensors per lane in the plane B-B;
Fig. 2 shows in side view the arrangements of sensors and camera presented on Fig. 1a and Fig. 1b;
Fig. 3 shows an arrangement of sensors in the mid-span cross section (plane A-A on Fig. 1a and Fig. 1b) of the bridge made of prefabricated beams of "Kujan" type;
Fig. 4 shows a sensor arrangement in the mid-span cross-section of the composite steel-concrete bridge;
Fig. 5 shows a sensor arrangement in the mid-span cross-section of the plate bridge;
Fig. 6 shows a longitudinal section of the prefabricated beam and two examples of mounting the sensors in the tensioned part of the beam;
Fig. 7 shows a longitudinal section of the prefabricated beam and two examples of mounting the sensors in the compressed part of the beam;
Fig. 8 shows a longitudinal section of the prefabricated beam and two examples of mounting the sensors in both compressed and tensioned parts of the beam.

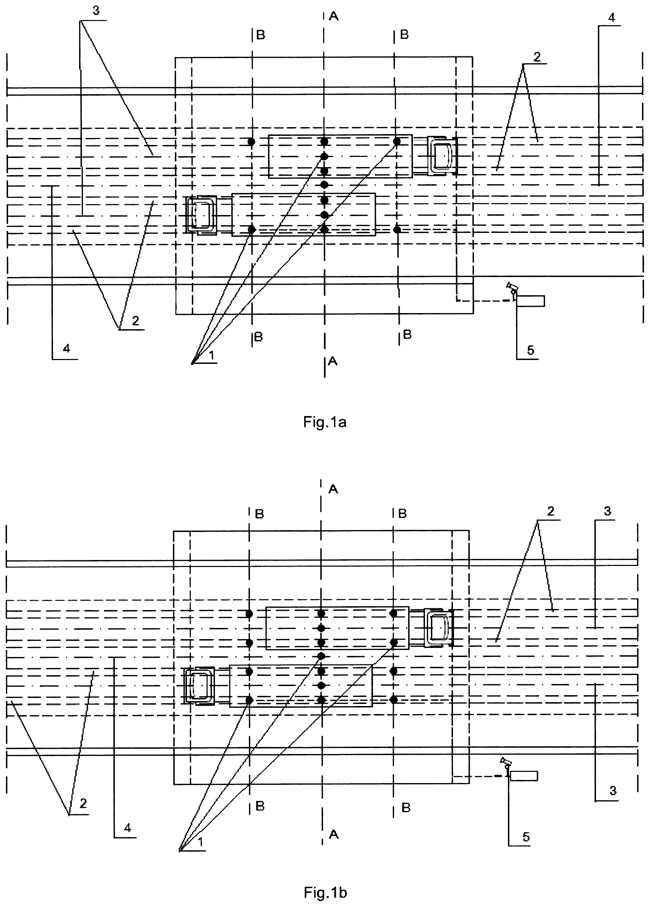

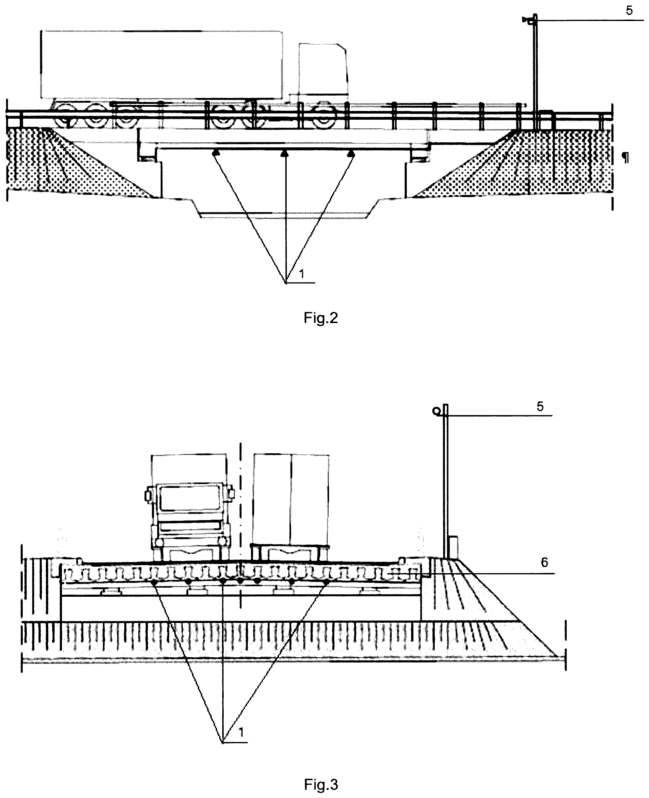

The embodiments described below in detail refer mostly to bridges, however other structures like ramps, approach banks, piers or toll gates can be designed following the same principles. Figures 1 to 5 illustrate simplified but very common examples of roadways consisting of two lanes only. However, the roadways consisting of any number of lanes are covered by this invention. The invention can be applied for both left driving (Fig. 1a, 1b) and right driving (Fig. 3, 4, 5).

As shown in Fig. 1a and 1b, three strain sensors 1 per lane are arranged in a vertical plane A-A passing through the center of the bridge span, wherein two of them are placed below the two tire traces 2, and one in the middle of the lane 3, i.e. on the lane 3 axis. Additionally one sensor 1 is placed between the lanes 3 on the roadway axis 4. In the vertical planes B-B located respectively at 1/4 and 3/4 of the length of the bridge span, the sensors 1 are mounted as well: under one tire trace 2 (Fig. 1a) or under both tire traces 2 (Fig. 1b).

The schematic drawing on Fig. 2 shows in side-view the arrangement of the sensors 1 and the camera 5 illustrated on Fig. 1a and Fig. 1b. Here the sensors 1 are located under the plate-like structure of the bridge, in the middle of the lane 3 and under the tire traces 2. The camera 5 is located right before the plane of the strain sensors 1.

Fig. 3 shows the arrangement of the sensors 1 in cross-section A-A of the span of a bridge build from prefabricated beams 6 of "Kujan" type. The sensors 1 are fixed to the foot bottom of the beam 6: one in the middle of the lane 3, two under the tire traces 2, and one on the axis 4 between the lanes 3.

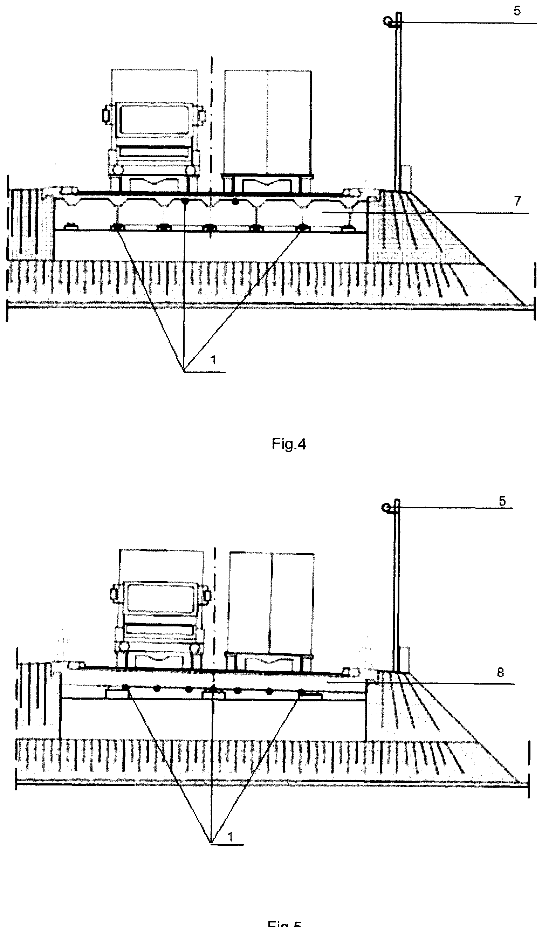

Fig. 4 shows another arrangement of the sensors 1 in cross-section A-A of the span of the bridge formed of the prefabricated plate-beams 7. Two sensors 1 are arranged one per lane under first tire traces 2 on the upper side of the plate-beams. Five sensors 1 are arranged on the lower part of the beam: two in the middle of both lanes 3 (one per lane), two under second tire traces 2 (one per lane), and one sensor 1 on the roadway axis 4 between the lanes 3.

Fig. 5 shows the sensors 1 arrangement in cross-section A-A of the span of the bridge made of concrete plates 8. All sensors 1 are arranged at the bottom side of the plate 8: one in the middle of each lane 3, two under each pair of tire traces 2, and one on the axis 4 between the lanes 3.

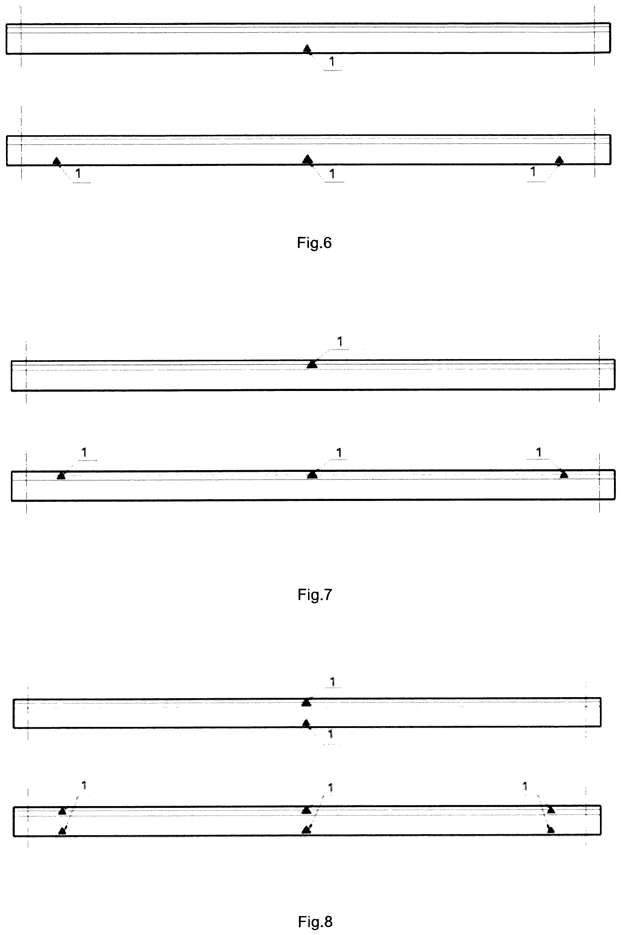

Fig. 6 shows a schematic longitudinal section of a prefabricated beam with the sensors 1 located at the bottom of the beam 6, 7, 8, in the so-called tension zone. Upper drawing shows one sensor 1 located at the bottom of the beam 6, 7, 8, in the middle of the lane 3. Lower drawing shows three sensors 1 located at the bottom of the beam 6, 7, 8: one in the middle of the lane 3, and two under the tire traces 2.

Fig. 7 shows a simplified longitudinal section of a prefabricated beam with the sensors 1 located in the upper part of the beam 6, 7, 8, in the so-called compression zone. Upper drawing shows one sensor 1 located in the upper part of the beam 6, 7, 8, in the middle of the lane 3. Lower drawing shows three sensors 1 located at the top of the beam 6, 7, 8: one in the middle of the lane 3, and two under the tire traces 2.

Fig. 8 shows a schematic longitudinal section of the prefabricated beam with the sensors 1 located in the upper and lower parts of the beam 6, 7, 8, i.e. in both tension and compression zones. Upper drawing shows two sensors 1 located in the upper and lower parts of the beam 6, 7, 8, i.e. in tension and compression zones, in the middle of the lane 3. Lower drawing shows six sensors located in the upper and lower parts of the beam 6, 7, 8: one pair of sensors 1 in the middle of the lane 3, and two pairs of sensors 1 under the tire traces 2.

## Claims

1. A system for weight preselection and evaluation of the technical state of road infrastructure, in particular a bridge, comprising a control unit, a set of strain sensors (1) connected wirelessly or by wire to the control unit and placed in a roadway, and at least one camera (5) connected wirelessly or by wire to the control unit and placed over the roadway, **characterized in that** the values of pressure exerted on each sensor (1), and of time interval between successive peaks of pressure from each sensor (1) are measured, and the camera (5) placed above the roadway makes an image of the front of the vehicle, and the vehicle is automatically identified based on the images recorded by the camera (5), and the result of identification is recorded in a data file identifying the vehicle, and the speed of the vehicle and the number of axles of the vehicle are determined from the peaks of pressure and time intervals between successive peaks, and the value of load on each axle of the vehicle is calculated, as well as the axle overload value equal to the difference between the load on given axle and the threshold, and wherein the calculated values are added to the data file identifying the vehicle, and the vehicles for which the calculated value of difference between the load on each axle and the threshold value is greater than zero are selected, and **in that** on a basis of measured values of pressure on each axle, speed, weight, vehicle wheelbase and length, and the number of measuring cycles, a degree of technical wear of the engineering object of road infrastructure, in particular a bridge, is calculated.

2. The system according to claim 1, **characterized in that** the sensors (1) are tensometers, accelerometers, resistivity sensors, optical fiber sensors or string sensors, preferably measuring pressure in the vertical direction.

3. The system according to claim 1 or 2, **characterized in that** the vehicles for which the measured speed is greater than a threshold value are selected.

4. A system according to any of claims 1 to 3, **characterized in that** the strain sensors (1) are placed in a plane of the cross section of the roadway under direct vertical influence (2) of wheels of the vehicle.

5. A system according to any of claims 1 to 4, **characterized in that** the strain sensors (1) are placed in a plane of the cross section of the roadway in the lane (3) midway between the locations of direct vertical influence (2) of wheels of the vehicle.

6. A system according to any of claims 1 to 5, **characterized in that** in the structures with at least two lanes (3) in the roadway the strain sensors (1) are placed in the plane of the cross section of the roadway between the lanes (3).

7. The system according to claim 4 or 5, or 6, **characterized in that** the cross section plane of the roadway, wherein the strain sensors (1) are placed, is situated at 1/4 and/or 1/2 and/or 3/4 of the length of the selected segment of the roadway.

8. The system according to claim 7, **characterized in that** the selected segment of the roadway is the span of the bridge.

9. The system according to claim 8, **characterized in that** in case of a bridge constructed from several spans, the strain sensors (1) are mounted on the outer spans of the bridge and/or on a selected internal span.

10. A system according to any of claims 1 to 9, **characterized in that** the strain sensors (1) are placed on and/or within and/or below the support structure of the bridge span.

11. A system according to any of claims 1 to 10, **characterized in that** the strain sensors (1) are embedded inside the supporting structure of the bridge span.

12. A system according to any of claims 1 to 11, **characterized in that** an additional camera (5) connected to the control unit is placed on the roadway side next to the monitored lane (3).

13. A system according to any of claims 1 to 12, **characterized in that** the measurement data are recorded in the storage memory of the control unit.

## Patentansprüche

1. System für die Vorauswahl der Masse und Beurteilung des technischen Zustands der Straßeninfrastruktur, insbesondere einer Brücke, bestehend aus der Steuereinheit, Spannungssensoren (1), die an die Steuereinheit über Kabel oder kabellos angeschlossen und in der Fahrbahn eingebaut sind sowie mindestens einer Kamera (5), die an die Steuereinheit über Kabel oder kabellos angeschlossen und oberhalb der Fahrbahn installiert ist, **dadurch gekennzeichnet, dass** die Werte des auf jeden Sensor (1) ausgeübten Druckes und die Zeitabstände zwischen den aufeinander folgenden Druckspitzen eines jeden Sensors (1) gemessen werden und die Kamera (5) oberhalb der Fahrbahn ein Bild des Fahrzeugvorderteils erstellt und das Fahrzeug anhand der durch die Kamera (5) erstellten Bilder automatisch identifiziert wird und das Ergebnis der Identifizierung in einer Fahrzeugidentifikationsdatei gespeichert wird, wobei die Geschwindigkeit und Achsenzahl des Fahrzeugs anhand der Druckspitzen und Zeitabstände zwischen den aufeinander folgenden Druckspitzen festgelegt wird, wobei der Wert der Belastung jeder Fahrzeugachse und der Wert der Überlastung der Achsen als Differenz zwischen der Belastung der jeweiligen und dem Schwellenwert berechnet wird, wobei die berechneten Werte in der Fahrzeugidentifizierungsdatei gespeichert werden, wobei Fahrzeuge gewählt werden, für welche der berechnete Wert der Differenz zwischen der Belastung der jeweiligen Achse und dem Schwellenwert größer als null ist, wobei anhand der gemessenen Werte der Achslast, Geschwindigkeit, Achsabstands und Fahrzeuglänge sowie der Anzahl der Messzyklen der Grad der technischen Abnutzung des technischen Objekts der Straßeninfrastruktur, insbesondere einer Brücke berechnet wird.

2. System nach Anspruch 1, **dadurch gekennzeichnet, dass** als Sensoren (1) Tensometer, Beschleunigungsmesser, Widerstandsmesser, Lichtleitersensoren oder Saitensensoren, bevorzugt zur Druckmessung in vertikaler Richtung verwendet werden.

3. System nach Anspruch 1 oder 2, **dadurch gekennzeichnet, dass** Fahrzeuge gewählt werden, für welche die gemessene Geschwindigkeit höher ist als der Schwellenwert.

4. System nach einem der Ansprüche 1 bis 3, **dadurch gekennzeichnet, dass** die Spannungssensoren (1) in der Querschnittsebene der Fahrbahn eingebaut und der direkten vertikalen Einwirkung (2) der Fahrzeugräder ausgesetzt sind.

5. System nach einem der Ansprüche 1 bis 4, **dadurch gekennzeichnet, dass** die Spannungssensoren (1) in der Querschnittsebene der Fahrbahn in der Fahrspur (3) auf dem halben Weg zwischen den Stellen der direkten vertikalen Einwirkung (2) der Fahrzeugräder eingebaut sind.

6. System nach einem der Ansprüche 1 bis 5, **dadurch gekennzeichnet, dass** bei Konstruktionen mit mindestens zwei Fahrspuren (3) in der Fahrbahn die Spannungssensoren (1) in der Querschnittsebene der Fahrbahn zwischen den Fahrspuren (3) eingebaut sind.

7. System nach Anspruch 4 oder 5 oder 6, **dadurch gekennzeichnet, dass** die Querschnittsebene der Fahrbahn, in welcher die Spannungssensoren (1) eingebaut sind, in 1/4 und/oder 1/2 und/oder 3/4 der Länge des gewählten Straßenabschnitts liegt.

8. System nach Anspruch 7, **dadurch gekennzeichnet, dass** der gewählte Straßenabschnitt ein Brückenfeld darstellt.

9. System nach Anspruch 8, **dadurch gekennzeichnet, dass** bei Brücken mit mehreren Feldern die Spannungssensoren (1) an Außenfeldern der Brücke und/oder am gewählten Innenfeld montiert werden.

10. System nach einem der Ansprüche 1 bis 9, **dadurch gekennzeichnet, dass** sich die Spannungssensoren (1) an und/oder im Bereich und/oder unter der Tragkonstruktion des Brückenfelds befinden.

11. System nach einem der Ansprüche 1 bis 10, **dadurch gekennzeichnet, dass** sich die Spannungssensoren (1) in der Tragkonstruktion des Brückenfelds befinden.

12. System nach einem der Ansprüche 1 bis 11, **dadurch gekennzeichnet, dass** sich die Zusatzkamera (5), die an die Steuereinheit angeschlossen ist, auf der Fahrbahnseite neben der zu überwachenden Fahrspur (3) befindet.

13. System nach einem der Ansprüche 1 bis 12, **dadurch gekennzeichnet, dass** die Messdaten in einem Massenspeicher der Steuereinheit gespeichert werden.

## Revendications

1. Un système de présélection de masse et d'évaluation de l'état technique d'une infrastructure routière, en particulier d'un pont, comprenant une unité de commande, un ensemble de capteurs de contrainte (1) reliés sans fil ou câblés à l'unité de commande et situés dans la chaussée, et au moins une caméra (5) reliée sans fil ou câblée à l'unité de commande et située au-dessus de la chaussée, **caractérisé en ce que** les valeurs de pression exercée sur chacun des capteurs (1) et les intervalles entre des pics de pression successifs de chaque capteur (1) sont mesurés et la caméra (5) située au-dessus de la chaussée crée une image de l'avant du véhicule et le véhicule est automatiquement identifié à partir des images enregistrées par la caméra (5), et le résultat de l'identification est stocké dans le fichier de données identifiant le véhicule, la vitesse du véhicule et le nombre d'essieux du véhicule sont déterminés à partir des pics de pression et des intervalles entre les pics successifs, la valeur de charge pour chaque essieu du véhicule est calculée, ainsi qu'une valeur de la charge par essieu égale à la différence entre la charge sur chaque essieu et la valeur seuil, les valeurs calculées étant ajoutées au fichier de données identifiant le véhicule, et les véhicules pour lesquels la valeur calculée de la différence entre la charge sur chaque essieu et la valeur seuil est supérieure à zéro étant sélectionnés, et **en ce que**, sur la base des valeurs mesurées de la charge sur chaque essieu, de la vitesse, du poids, de l'empattement et de la longueur du véhicule et du nombre de cycles de mesure, le degré d'usure technique de l'objet technique de l'infrastructure routière, en particulier le pont, est calculé.

2. Le système selon la revendication 1, **caractérisé en ce que** les capteurs (1) sont des jauges de contrainte, des accéléromètres, des capteurs de résistivité, des capteurs à fibres optiques ou des capteurs à cordes, mesurant de préférence la pression dans la direction verticale.

3. Le système selon la revendication 1 ou 2, **caractérisé en ce que** les véhicules pour lesquels la vitesse mesurée est supérieure à la valeur seuil sont sélectionnés.

4. Le système selon l'une quelconque des revendications d'1 à 3, **caractérisé en ce que** les capteurs de contrainte (1) sont situés dans le plan de la section transversale de la chaussée sous l'influence verticale directe (2) des roues du véhicule.

5. Le système selon l'une quelconque des revendications d'1 à 4, **caractérisé en ce que** les capteurs de contrainte (1) sont situés dans le plan de la section transversale de la chaussée sur la voie (3) à mi-chemin entre les zones d'impact vertical direct (2) des roues du véhicule.

6. Le système selon l'une quelconque des revendications d'1 à 5 **caractérisé en ce que** dans les ouvrages à deux ou plusieurs voies (3) dans la chaussée, les capteurs de contrainte (1) sont placés dans le plan de la section transversale de la chaussée entre les voies (3).

7. Le système selon la revendication 4 ou 5, ou 6, **caractérisé en ce que** le plan de la section transversale de la chaussée dans laquelle se trouvent les capteurs de contrainte (1) est situé à 1/4 et/ou 1/2 et/ou 3/4 de la longueur de la section de chaussée choisie.

8. Le système selon la revendication 7, **caractérisé en ce que** la section de route choisie est la travée du pont.

9. Le système selon la revendication 8, **caractérisé en ce que,** dans le cas d'un pont constitué de plusieurs travées, les capteurs de contrainte (1) sont montés sur les travées extérieures du pont et/ou sur la travée intérieure choisie.

10. Le système conforme à l'une quelconque des revendications d'1 à 9, **caractérisé en ce que** les capteurs de contrainte (1) sont situés sur et/ou dans et/ou sous la superstructure de la travée du pont.

11. Le système selon l'une quelconque des revendications d'1 à 10, **caractérisé en ce que** les capteurs de contrainte (1) sont encastrés à l'intérieur de la superstructure de la travée du pont.

12. Le système selon l'une quelconque des revendications d'1 à 11, **caractérisé en ce qu'une** caméra supplémentaire (5) reliée à l'unité de commande est placée en bord de route à côté de la voie surveillée (3).

13. Le système selon l'une quelconque des revendications d'1 à 12, **caractérisé en ce que** les données de mesure sont stockées dans la mémoire de masse de l'unité de commande.
